# EUROPEAN PATENT APPLICATION

(11) **EP 4 592 255 A1**
(43) Date of publication of application: **30.07.2025**
(21) Application number: 25154038.1
(22) Date of filing: 27.01.2025
(51) Int. Cl.: C02F 1/68

(54) **METHOD FOR DOSING MINERALS**

(30) Priority: 26.01.2024 EP 24154173
(71) Applicant: Flamingo Holding SA, 1180 Uccle (BE)
(72) Inventor: Tob, Philippe, 1180 Uccle (BE)
(74) Representative: De Clercq & Partners

(57) **Abstract**

The invention broadly relates to the field of mineral water production, more precisely in the field of domestic mineral water production. In particular, the invention concerns a method for dosing minerals into a water stream and kit for applying the method.

## Description

### FIELD

The invention broadly relates to the field of mineral water production, more precisely in the field of domestic mineral water production. In particular, the invention concerns a method for dosing minerals into a water stream and kit for applying the method.

### BACKGROUND

Water mineralization is a natural process wherein essential minerals are dissolved and integrated into water, augmenting its nutritional content. In nature, water mineralization occurs when water interacts with geological formations like rocks and soil, absorbing minerals such as calcium, magnesium, potassium, and trace elements. However, there are instances where water lacks sufficient minerals or has been demineralized. Water sources with insufFicient mineralization may necessitate artificial mineral supplementation for optimal human consumption. This also included purified water that has been stripped entirely or partly of its minerals. The mineral composition of water is essential for the environment, human health and the water infrastructure at large. Artificial mineral supplementation involves supplementing water with minerals, often using mineral cartridges in water filters or ion exchange resins in households. Mineral-rich solid additives like salts may also be introduced for desired mineral concentrations. Typically, water is carbonated with carbon dioxide to enhance the water's ability to dissolve sparingly soluble minerals such as calcite. Users may encounter challenges in cartridge maintenance, such as ensuring proper installation, cleaning, or handling, affecting their efficacy in mineralizing water. The replacement of mineral cartridges may entail ongoing costs, a consideration for individuals managing their budget based on replacement frequency and specific minerals involved. Moreover, solid minerals in pellets and beads of calcite and dolomite achieve low mineral concentrations in purified water. Whereas liquid mineral solutions containing chlorides, in high concentrations in purified water, may stain the flavor of water. In contrast, bicarbonate solutions can achieve high mineral concentrations without staining the taste of water. Also Calcium and Magnesium are present in popular natural waters as bicarbonate rather than chlorides. The use of bicarbonate solutions is therefore desirable and superior to the solid minerals and the chloride based solutions. But the main drawback of bicarbonate (supersaturated) solutions of sparingly soluble salts is their instability and tendency to crystalize.

In view thereof, there remains a need in the art for further and/or improved systems and techniques for mineralisation of water.

### SUMMARY

One of the major challenges for the optimal effect of mineralisation of water, closely or fully resembling the composition of natural mineral water, is accurate dosing of sparingly soluble minerals whilst avoiding crystallisation of the minerals. The present inventors have developed a method, device and kit for precise dosing minerals into a water stream, thereby addressing one or more of the above-mentioned problems in the art.

In view of these advantages, an aspect of the invention provides a method for dosing minerals into a water stream, by flowing a water stream from a water inlet to a water outlet, wherein said water stream passes through a dosing system for dosing minerals into said water stream, said dosing system comprising:
a. a dosing system inlet for said water stream and a dosing system outlet for said water stream, said dosing system inlet being fluidically connected to said dosing system outlet through a conduit;
b. at least one cannister comprising a mineral composition, said cannister comprising a stem; and
c. at least one dosing valve, fluidically connecting said at least one cannister with said conduit, said dosing valve comprising a solenoid valve, a cannister connector fluidically connecting said solenoid valve to the stem of said cannister and a conduit connector fluidically connecting said solenoid valve to said conduit;
wherein by controlling said solenoid valve said mineral composition is dosed from said cannister into said water stream.

An advantage of the method with said dosing valve is that it yields precise control and accuracy in dispensing fluids into the water stream.

In certain embodiments, the dosing valve comprises a fluidic volume ranging between about 0.05 ml and 1.0 ml, between about 0.07 ml and 0.90 ml, between about 0.08 ml and 0.80 ml, between about 0.09 ml and 0.70 ml, or between about 0.10 ml and 0.50 ml. An advantage thereof is that the dosing valve with said fluidic volume not only offers precise control and accuracy in fluid dosing but also presents an additional advantage of reducing or eliminating the risk of crystallization of minerals within the dosing valve. The limited fluidic volume minimizes potential accumulation of mineral deposits and crystallization within the dosing system. This advantage of prevention of crystallization is particularly significant in ensuring the sustained efficiency and functionality of dosing systems over extended periods.

An embodiment provides a method, wherein the step of dosing said mineral composition from said cannister into said water stream comprises periodic dosing at fixed intervals.

An embodiment provides a method, wherein periodic dosing comprises opening said dosing valve at fixed intervals every 0.5 to 10.0 seconds.

An embodiment provides a method, wherein periodic dosing comprises opening said dosing valve between 10 milliseconds and 5.0 seconds.

An embodiment provides a method, wherein periodic dosing comprises dosing between 0.01 to 0.25 mg per millisecond of minerals in a single dose.

A related aspect provides a dosing system for use in the method as described herein, said dosing system comprising:
a. a dosing system inlet for said water stream and a dosing system outlet for said water stream, said dosing system inlet being fluidically connected to said dosing system outlet through a conduit;
b. at least one cannister comprising a mineral composition, said cannister comprising a stem; and
c. at least one dosing valve, fluidically connecting said at least one cannister with said conduit, said dosing valve comprising a solenoid valve, a cannister connector fluidically connecting said solenoid valve to the stem of said cannister and a conduit connector fluidically connecting said solenoid valve to said conduit.

A further aspect provides a kit comprising the parts of the dosing system as described herein, instructions for assembling said dosing system and attaching said dosing system to a water stream and instructions for conducting the method as described herein.

These and further aspects and preferred embodiments of the invention are described in the following sections and in the appended claims. The subject-matter of the appended claims is hereby specifically incorporated in this specification.

### BRIEF DESCRIPTION OF DRAWINGS

In order to better demonstrate the features of the invention, some examples of possible and preferred embodiments of the present invention are described in the accompanying figures without any limiting character. In these figures, like numbers indicate like or similar elements. The numerical references are discussed in more detail in the examples.

Throughout the description, claims, and figures, the following numbering is used:
**Figure 1****.** illustrates an exploded representation of a dosing system 1 according to an embodiment of the invention the invention. **1:** dosing system; **2:** dosing system inlet; **4:** dosing valve; **5:** fixture; **5a:** snap element **5b:** tightening nut; **8:** computer device.
**Figure 2****.** illustrates a side view of Figure 1. **1****:** dosing system; **3:** dosing system outlet; **4:** dosing valve; **5:** fixture; **5a:** snap element **5b:** tightening nut; **8:** computer device.
**Figure 4a** illustrates a perspective view of a conduit connector of the dosing system. **6:** conduit connector; **61:** inlet; **62:** outlet; **63:** passage; **64:** threaded end.
**Figure 4b** illustrates a front view of Figure 4a. **6****:** conduit connector; **61:** inlet; **62:** outlet; **63:** passage; **64:** threaded end.
**Figure 4c** illustrates a cross section of Figure 4a. **6****:** conduit connector; **61:** inlet; **62:** outlet; **63:** passage; **64:** threaded end.
**Figure 5a** illustrates a perspective view of a cannister connector of the dosing system. **7:** cannister connector; **71:** inlet; **72:** outlet; **73:** passage; **74:** threaded end.
**Figure 5b** illustrates a front view of Figure 5a. **7****:** cannister connector; **71:** inlet; **72:** outlet; **73:** passage; **74:** threaded end.
**Figure 5c** illustrates a cross section of Figure 5a. **7****:** cannister connector; **71:** inlet; **72:** outlet; **73:** passage; **74:** threaded end.
**Figure 6a** illustrates a cross-section according to line Vla-Vla of Figure 3 wherein the dosing system is in dosing position. **6:** conduit connector; **61:** inlet; **62:** outlet; **63:** passage; **7:** cannister connector; **71:** inlet; **72:** outlet; **73:** passage; **A:** inner diameter; **B:** outer diameter.
**Figure 6b** illustrates a cross-section according to line Vla-Vla of Figure 3 wherein the dosing system is in closed position. **6:** conduit connector; **61:** inlet; **62:** outlet; **63:** passage; **7:** cannister connector; **71:** inlet; **72:** outlet; **73:** passage; **A:** inner diameter; **B:** outer diameter.
**Figure** 7 illustrates a schematic representation of the method according to the invention. **1:** dosing system; **2:** dosing inlet; **3:** dosing system outlet; **80:** water pipe; **81:** cannister; **82:** upstream **83:** downstream; **8:** computer device.

### DESCRIPTION OF EMBODIMENTS

As used herein, the singular forms "a", "an", and "the" include both singular and plural referents unless the context clearly dictates otherwise.

The terms "comprising", "comprises" and "comprised of" as used herein are synonymous with "having", "have", "including", "includes", "containing", or "contains", and are inclusive or open-ended and do not exclude additional, non-recited members, elements or method steps. The terms also encompass "constituted of", "consists in", "consisting of", and "consists of", and also the terms "consisting essentially of", "consisting essentially in" and "consists essentially of", which enjoy well-established meanings in patent terminology.

The recitation of numerical ranges by endpoints includes all integer numbers and, where appropriate, fractions subsumed within the respective ranges, as well as the recited endpoints. This applies to numerical ranges irrespective of whether they are introduced by the expression "from... to..." or the expression "between... and..." or another expression. Any numerical range recited herein is intended to include all sub-ranges subsumed therein.

The terms "about" or "approximately" as used herein when referring to a measurable value such as a parameter, an amount, a temporal duration, and the like, are meant to encompass variations of and from the specified value, such as variations of +/- 10 % or less, preferably +/- 5 % or less, more preferably +/-1 % or less, and still more preferably +/- 0.1 % or less of and from the specified value, insofar such variations are appropriate to perform in the disclosed invention. It is to be understood that the value to which the modifier "about" or "approximately" refers is itself also specifically, and preferably, disclosed.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members. In another example, "one or more" or "at least one" may refer to 1, 2, 3, 4, 5, 6, 7 or more.

As used herein, the term "and/or" when used in a list of two or more items, means that any one of the listed items can be employed by itself or any combination of two or more of the listed items can be employed. For example, if a list is described as comprising group A, B, and/or C, the list can comprise A alone, B alone, C alone, A and B in combination, A and C in combination, B and C in combination, or A, B, and C in combination.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

The inventors have developed a method for dosing minerals into a water stream, by flowing a water stream from a water inlet to a water outlet, wherein said water stream passes through a dosing system for dosing minerals into said water stream, said dosing system comprising:
a. a dosing system inlet for said water stream and a dosing system outlet for said water stream, said dosing system inlet being fluidically connected to said dosing system outlet through a conduit;
b. at least one cannister comprising a mineral composition, said cannister comprising a stem; and
c. at least one dosing valve, fluidically connecting said at least one cannister with said conduit, said dosing valve comprising a solenoid valve, a cannister connector fluidically connecting said solenoid valve to the stem of said cannister and a conduit connector fluidically connecting said solenoid valve to said conduit;
wherein by controlling said solenoid valve said mineral composition is dosed from said cannister into said water stream.

As used herein, the term "dosing" refers to a method of introducing minerals or a mineral composition into a water stream, preferably at regular and predetermined time intervals. The dosing process involves administering a quantity of minerals to the water stream for the purpose of achieving desired mineral concentrations in the water stream or maintaining optimal water quality.

The conduit connector as used herein refers to the connection element of the dosing system that fluidically connects the solenoid valve to the conduit. The connection can be a T-shaped connection element fixed in the dosing system.

In a certain embodiment, the dosing system comprises at least two dosing valves, at least three dosing valves, or at least four dosing valves, each of said dosing valves being connected to a cannister comprising a different mineral composition.

The cannister connector as used herein functions as a connector fluidically connecting the dosing valve to the stem of a cannister. In particular embodiments the cannister connector comprises a connection pipe, preferably a flexible connection pipe, having a first end connected to the outlet of the cannister and a second end connected to the dosing system. This connection pipe can be used in cases where the cannister is too large or too heavy to be fixed directly to said dosing system, but needs to be positioned on a more stable remote location. Preferably said first end of said pipe comprises a fixture such as a threaded cap configured to tightly engage with the stem of said cannister, and said second end is fluidically connected to said dosing valve.

The cannister connector preferably applies pressure on the stem of the cannister allowing the opening of the cannister and at least one dose of the mineral composition to flow out of the cannister.

In certain embodiments, the solenoid valve is computer controlled. The terms "computer controlled" generally refers to a system, device, or process that is governed, directed, or manipulated by a computer or a computational apparatus. The computer control encompasses the ability of the computer to autonomously or semi-autonomously regulate, coordinate, and execute various functions, operations, or tasks. Such control may involve the execution of predefined parameters, such as frequency, time, dose, etc., or real-time decision-making based on predefined algorithms. In a preferred embodiment, the device controlling the solenoid valve is an Arduino device.

In certain embodiments, the dosing system further comprises a fixture for said cannister, to tightly connect the cannister to the dosing system, and preferably said fixture comprises a snap element and a tightening nut, preferably being threaded on the inner side to twist said fixture on said cannister. The threaded fixture for tightly connecting the cannister to the dosing system facilitates a uniform distribution of forces, minimizes potential leakage of the mineral composition and ensures increased structural integrity for a robust and reliable connection between the cannister and the dosing system. Additionally, the threaded fixture simplifies assembly and disassembly of the cannister from the dosing system.

Alternatively the fixture for said cannister comprises a single element to which said cannister can be attached, thereby connecting said cannister to the dosing system. By using a single element for connecting the cannister to the dosing system the ease of use of the system can be greatly improved. Also the risk of leaks is reduced.

In certain embodiments, the step of dosing the mineral composition from the cannister into water stream comprises periodic dosing at fixed intervals. The step of dosing the mineral composition from the cannister into water stream can comprise periodic dosing at regular and predetermined intervals. In certain embodiments, periodic dosing comprises opening said dosing valve at fixed intervals every 0.5 to 10.0 seconds, preferably 1.0 to 10.0 seconds, preferably 2.0 to 9.0 seconds, more preferably 3.0 to 7.0 seconds, even more preferably 4.0 to 6.0 seconds. In some embodiments, the opening said dosing valve can vary between each of the values above.

In certain embodiments, periodic dosing comprises opening said dosing valve between 10 milliseconds and 5.0 seconds, preferably 200 milliseconds to 4.0 seconds, preferably 300 milliseconds to 3.0 seconds, more preferably 400 milliseconds to 2.0 seconds, more preferably 500 milliseconds to 1000 milliseconds, more preferably 600 milliseconds to 900 milliseconds, even more preferably 700 milliseconds to 800 milliseconds. In some embodiments, the periodic dosing can vary between each of the values above.

In certain embodiments, wherein periodic dosing comprises dosing between 0.01 to 0.25 mg of minerals or mineral composition in a single dose, preferably 0.1 to 0.20 mg, preferably 0.2 to 0.19 mg, preferably 0.3 to 0.18 mg, preferably 0.4 to 0.17 mg preferably 0.5 to 0.16 mg, preferably 0.6 to 0.15 µg, preferably 0.7 to 0.14 mg, preferably 0.8 to 0.13 mg, more preferably 0.9 to 0.11 mg. In some embodiments, a single dose of mineral composition can vary between each of the values above.

As used herein, the term "periodic dosing" refers to a method of introducing a dose of minerals or a mineral composition into a water stream at regular and predetermined time intervals. The periodic nature of the dosing process is designed to ensure a consistent and controlled infusion of minerals or the mineral composition, preventing over-dosage or under-dosage of minerals or the mineral composition. Periodic dosing can also comprise introduction minerals or a mineral composition into a water stream during a predetermined time. In this case, periodic dosing can involve opening of the dosing valves for a predetermined time, after which the dosing valves close again.

In certain embodiments, the pressure of said water stream ranges between 2.0 and 6.0 bar, preferably 2.5 to 5.5 bar, preferably 3.0 to 5.0 bar, preferably 3.5 to 4.5 bar, and wherein the pressure of said mineral composition in said cannister ranges between 3.0 and 15.0 bar, preferably 3.5 to 14.0 bar, preferably 4.0 to 13.0 bar, preferably 4.5 to 12.0 bar, preferably 5.0 and 11.0 bar, preferably 5.5 to 10.0 bar, preferably 6.0 to 9.0 bar, preferably 7 to 8.0 bar. In some embodiments, the pressure of said water stream can vary between each of the values above.

In certain embodiments, minerals and mineral composition comprises a dry powder form of carbonates, bicarbonates, hydroxylates, chlorides and/or sulfates of calcium, magnesium and/or sodium.

In certain embodiments, the dosing valve comprises a fluidic volume ranging between about 0.05 ml and 1.0 ml, between about 0.07 ml and 0.90 ml, between about 0.08 ml and 0.80 ml, between about 0.09 ml and 0.70 ml, or between about 0.10 ml and 0.50 ml.

In certain embodiments, before or during step c) said water stream is carbonated (e.g. using carbon dioxide)

In certain embodiments, the method further comprises the step of measuring the Total Dissolved Solids levels in said water stream upstream and/or downstream from said dosing system.

As used herein, the term "Total Dissolved Solids" generally refers to inorganic and organic substances present in a liquid solution. Typically, the Total Dissolved Solids (TDS) comprises a combination of inorganic and organic substances present in a liquid solution. TDS can encompass a broad range of dissolved materials, including, but not limited to, inorganic salts such as calcium, magnesium, potassium, sodium, bicarbonates, chlorides, and sulphates, minerals, metals, cations, anions, and other organic compounds. The measurement of TDS can be utilized for water quality assessment. Another aspect of the invention provides a dosing system for use in the method described herein, wherein the dosing system comprises:
a. a dosing system inlet for the water stream and a dosing system outlet for said water stream, said dosing system inlet being fluidically connected to said dosing system outlet through a conduit;
b. at least one cannister comprising a mineral composition, said cannister comprising a stem; and
c. at least one dosing valve, fluidically connecting said at least one cannister with said conduit, said dosing valve comprising a solenoid valve, a cannister connector fluidically connecting said solenoid valve to the stem of said cannister and a conduit connector fluidically connecting said solenoid valve to said conduit.

Another aspect of the invention provides kit comprising the parts of the dosing system and instructions for conducting the method as described herein.

In a preferred embodiment, the kit further comprises instructions for assembling said dosing system and attaching said dosing system to a water stream.

In order to better show the features of the invention, some embodiments are described below, by way of example without any limiting character, with reference to the appended figures. The embodiments illustrated in the figures are preferred embodiments of the present invention and should not be construed as limiting in any way.

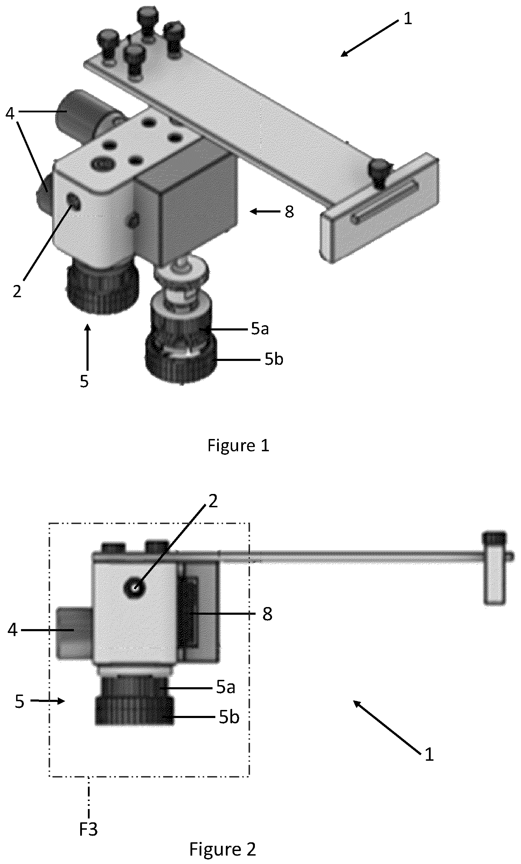

To further explain the dosing system and its use, reference is made to figures 1 to 7. These figures show a preferred embodiment of a device according to the present invention from different views.

**Figures 1 to 3** illustrate an embodiment of a dosing system **1.** In the examples shown in figures the dosing system **1** comprises a dosing system inlet **2** and a dosing system outlet **3,** said dosing system inlet **2** being fluidically connected to said dosing system outlet **3** through a conduit, at least one dosing valve **4** comprising a solenoid valve, a cannister connector **7** fluidically connecting the dosing valve **4** to the stem of a cannister and a conduit connector **6** fluidically connecting the dosing valve **4** to said conduit. The dosing system **1** further comprising a fixture **5** comprising a snap element **5a** and a tightening nut **5b.** The dosing valve **4** being computer controlled by a computer device **8.**

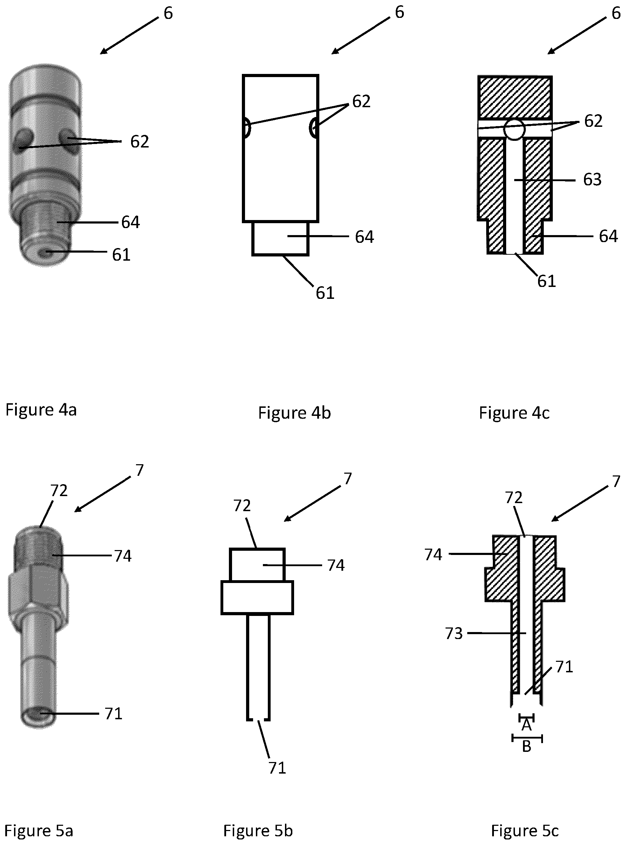

**Figures 4a to 4c** illustrate an embodiment of a conduit connector **6.** In the examples shown in figures the conduit connector **6** comprises an inlet **61** and an outlet **62** and passage **63** extending between the inlet **61** and outlet **62,** wherein in the outlet **62** is transversal to the inlet **61** and wherein the inlet **61** is connected to the dosing valve **4.** The conduit connector **6** can further comprise fastening means to attach the conduit connector **6** to the dosing valve **4.** In example shown in figure **4a** the fastening means comprises threaded end **64** for fastening the conduit connector **6** to the dosing valve **4.** The fastening means of the conduit connector **6** is preferably located at the end of the inlet **61.**

**Figures 5a to 5c** illustrate an embodiment of a cannister connector **7.** In the examples shown in figures the cannister connector **7** comprises an inlet **71,** an outlet **72** and a passage **73** extending longitudinally from the inlet **71** to the outlet **72.** The passage **73** preferably has an inner diameter **A** smaller than the outer diameter of the pin of the cannister to which the cannister connecter **7** is connected.

Furthermore, the passage **73** can also contain an outer diameter **B,** preferably, bigger than the outer diameter of the of the pin of the cannister to which the cannister connecter **7** is connected. The cannister connector **7** can further comprise fastening means to attach the cannister connector **7** to the dosing valve **4.** In example shown in figure **5a** the fastening means comprises threaded end **74** for fastening the cannister connector **7** to the dosing valve **4.** The fastening means of the cannister connector **7** is preferably located at the end of the outlet **71.**

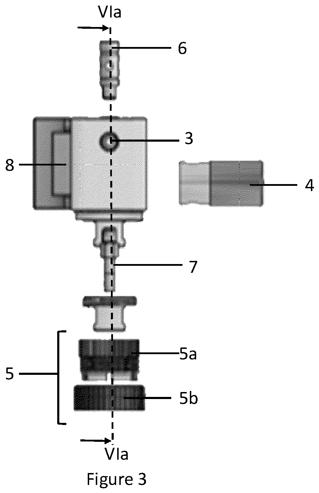

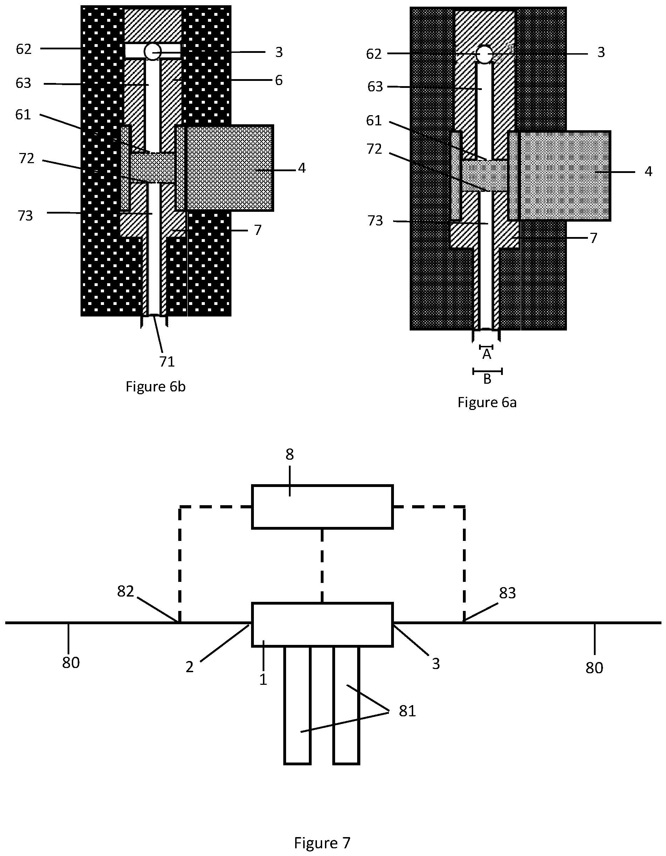

**Figure 6a** illustrates an embodiment of a dosing system **1,** wherein the dosing system is in a dosing position to dose a mineral composition into the water stream. In the dosing position, the outlet of the conduit connector **6** is fluidically connected to the water stream. In a preferred embodiment, outlet **63** of the conduit connector **6** is aligned with the water stream. In embodiments, the outlet **63** of the conduit connector **6** is aligned with the outlet **3** of the dosing system. In the example shown in figure 3b, the passage **73** of the cannister connector **7** and the passage of the conduit connector are mechanically connected via the dosing valve **4.** A Dose of mineral composing can enter the dosing system **1** when the inlet **71** of the cannister connector **7** presses on the pin of the cannister and thereby releasing a dose of mineral composing from the cannister. The mineral composition flows through the passage **73** of the cannister connector **7,** through the dosing valve **4** to enter the conduit connector **6** via the inlet **61.** The mineral composition can than flow through the passage **63** to outlet **62** of the conduit connector **6** to enter the water stream.

**Figure 6b** illustrates an embodiment of a dosing system **1,** wherein the dosing system 1 is in a closed position to prevent the mineral composition from entering the water stream. In a closed position, the conduit connector is turned away from the dosing position. In embodiments, the outlet **63** of the conduit connector **6** is nonaligned with the outlet **3** of the dosing system **1.** The outlet **63** of the conduit connector **6** can be transversal to the outlet **3** of the dosing system **1.** Furthermore, the outlet **63** of the conduit connector **6** can be transversal to the water stream.

**Figure 7** illustrates an embodiment of a method according to the invention, wherein a dosing system 1 is applied to a water pipe **80** through which a water stream can flow, wherein said water stream passes through the dosing system **1,** from the water inlet **2** to the water outlet **3,** for dosing minerals into said water stream. In the example shown in the figure 7 two cannisters **81,** comprising a mineral composition, are connected to the dosing system **1.** The dosing valve **4** is connected to a computer system **8.** In addition, the computer system **8** can be connected to the water stream, preferably upstream **82** and downstream **83** of the dosing system **1.** In this case sensors can be applied to the water stream, preferably upstream **82** and downstream **83** of the dosing system **1.** The upstream sensors can monitor the incoming water quality, such as pH sensors, conductivity meters, turbidity sensors, and other relevant sensors. The downstream sensors can monitor the treated water quality.

These downstream sensors can monitor effectiveness of the dosing of mineral composition and that the desired mineral concentrations in the outgoing water are achieved.

## Claims

1. A method for dosing minerals into a water stream, by flowing a water stream from a water inlet to a water outlet, wherein said water stream passes through a dosing system for dosing minerals into said water stream, said dosing system comprising:
a. a dosing system inlet for said water stream and a dosing system outlet for said water stream, said dosing system inlet being fluidically connected to said dosing system outlet through a conduit;
b. at least one cannister comprising a mineral composition, said cannister comprising a stem; and
c. at least one dosing valve, fluidically connecting said at least one cannister with said conduit, said dosing valve comprising a solenoid valve, a cannister connector fluidically connecting said solenoid valve to the stem of said cannister and a conduit connector fluidically connecting said solenoid valve to said conduit;
wherein by controlling said solenoid valve said mineral composition is dosed from said cannister into said water stream.

2. The method according to claim 1, wherein said dosing system comprises at least two dosing valves, each of said dosing valves being connected to a cannister comprising a different mineral composition.

3. The method according to claim 1 or 2, wherein said cannister connector applies pressure on said stem of said cannister allowing the opening of said cannister and the flow of said mineral composition out of said cannister.

4. The method according to any of the previous claims, wherein said solenoid valve is computer controlled.

5. The method according to any of the previous claims, wherein said dosing system further comprises a fixture for said canister, thereby tightly connecting said cannister to said dosing system, and preferably said fixture comprises a cap threaded on the inner side to twist said fixture on said cannister.

6. The method according to any of the previous claims, wherein the step of dosing said mineral composition from said cannister into said water stream comprises periodic dosing at fixed intervals.

7. The method according to claim 6, wherein periodic dosing comprises opening said dosing valve at fixed intervals every 0.5 to 10.0 seconds.

8. The method according to claim 6 or 7, wherein periodic dosing comprises opening said dosing valve between 10 milliseconds and 5.0 seconds.

9. The method according to any of claims 6 to 8, wherein periodic dosing comprises dosing between 0.01 and 0.25 mg per millisecond of minerals in a single dose.

10. The method according to any of the previous claims, wherein the pressure of said water stream ranges between 2.0 and 6.0 bar and wherein the pressure of said mineral composition in said cannister ranges between 3.0 and 15.0 bar.

11. The method according to any of the previous claims, wherein said mineral composition comprises a dry powder form of carbonates, bicarbonates, hydroxylates, chlorides and/or sulfates of calcium, magnesium and/or sodium.

12. The method according to any of the previous claims, wherein the fluidic volume of said dosing valve ranges between 0.05 ml and 1.0 ml.

13. The method according to any of the previous claims, wherein the method further comprises the step of measuring the Toal Dissolved Solids levels in said water stream upstream and/or downstream from said dosing system.

14. A dosing system for use in the method according to any of claims 1 to 13, said dosing system comprising:
a. a dosing system inlet for said water stream and a dosing system outlet for said water stream, said dosing system inlet being fluidically connected to said dosing system outlet through a conduit;
b. at least one cannister comprising a mineral composition, said cannister comprising a stem; and
c. at least one dosing valve, fluidically connecting said at least one cannister with said conduit, said dosing valve comprising a solenoid valve, a cannister connector fluidically connecting said solenoid valve to the stem of said cannister and a conduit connector fluidically connecting said solenoid valve to said conduit.

15. A kit comprising the parts of the dosing system according to claim 14, instructions for assembling said dosing system and attaching said dosing system to a water stream and instructions for conducting the method of according to any of claims 1 to 13.
